# FASCICULE DE BREVET EUROPEEN

(11) **EP 0 481 046 B1**
(45) Date de publication et mention de la délivrance du brevet: **14.06.1995**
(21) Numéro de dépôt: 91908515.9
(22) Date de dépôt: 10.04.1991
(51) Int. Cl.: F16C 19/40, F16C 33/52, F01B 1/06

(54) **POMPES ET MOTEURS A CYLINDRES RADIAUX**
RADIALZYLINDERMOTOREN UND -PUMPEN
RADIAL CYLINDER PUMPS AND MOTORS

(30) Priorité: 24.04.1990 IT 1245090
(43) Date de publication de la demande: 22.04.1992
(73) Titulaire: ERRANTE, Ester, I-16152 Genova (IT)
(72) Inventeur: ERRANTE, Ester, I-16152 Genova (IT)
(86) Numéro de dépôt international: IT9100029
(87) Numéro de publication internationale: WO9116547

(56) Documents cités:
- FR-A- 1 335 536
- GB-A- 2 209 059
- US-A- 2 130 299
- US-A- 2 189 773

## Description

Dans les pompes et moteurs à cylindres radiaux employés en oleodynamique le mouvement alternatif des pistons est obtenu en faisant parcourir à leur extrémité en saillie du rotor une piste annulaire excentrique avec l'axe de la pompe ( sous-entendant que dorénavant parlant des pompes nous nous référons même aux moteurs ).

Pour répartir la poussée que dans la phase de refoulement l'huile en pression exerce sur les pistons et que ceux-ci transmettent à la piste annulaire excentrique sur une surface plus ample que celle théoriquement ponctuelle que l'on aurait entre les pistons et la piste, parmi ces deux organes on interpose un patin qui est généralement relié au piston avec un joint sphérique et qui glisse sur la piste annulaire en frottement fluide obtenu par appui hydrostatique et c'est à dire en envoyant dans la zone centrale du patin de l'huile en pression qui y arrive à travers un petit trou qui traverse le piston, le joint sphérique et le patin même.

Dans une exécution plus récente dans la quelle les patins ne sont pas entrainés en rotation par les pistons au moyen du joint sphérique mais directement par le rotor, les patins ne sont plus soutenus hydrostatiquement sur la piste annulaire et celle-ci est constituée par un roulement à aiguilles sans anneau intérieur sur lequel les patins roulent en frottement roulant.

Pour raisons constructives surtout de caractére mecanique les traverses de la cage ont une épaisseur considérable, raison pour laquelle les aiguilles sont sensiblement éloignées entre elles.

Du document US-A- 2 130 299 est connu une pompe ou un moteur à cylindres radiaux dans laquelle/lequel la poussée exercée sur les pistons par l'huile sous pression pendant la phase de refoulement/de travail et que les pistons transmettent aux patins vient s'exercer par les patins sur une piste annulaire extérieure au moyen d'aiguilles cylindriques placées directement sur ladite piste annulaire extérieure sans l'interposition d'une cage.

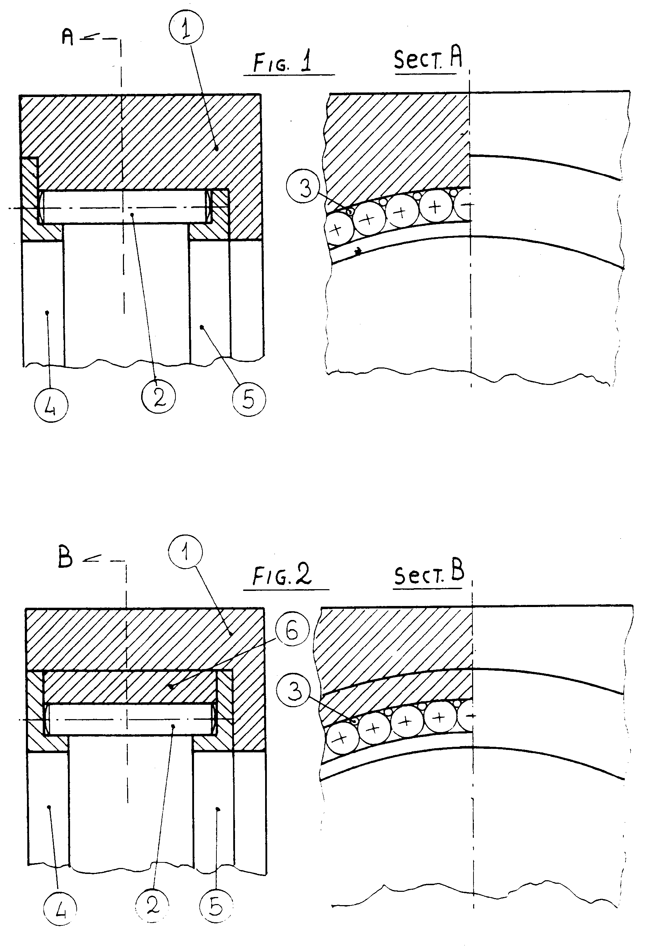

L'objet de l'invention pour laquelle l'on revendique le brevet est la substitution du roulement par un système d'aiguilles directement placées sur le support du roulement dans lequel est disposée la piste annulaire et placées presque au contact entr'elles de sorte que leur nombre en résulte sensiblement augmenté en comparaison de celles qui étaient contenues dans un roulement à aiguilles avec une cage et de sorte que le frottement que l'on aurait entre les aiguilles adjacentes est evité (fig 1.1). Avec le terme " support " nous entendons dans les pompes à cylindrée fixe leur carcasse même, tandis que dans celles à cylindrée variable nous entendons l'organe qui rend possible son mouvement de translation à l'intérieur de la carcasse même.

Une pompe ou un moteur selon l'invention sont définis par les caractéristiques de la rivendication 1.

Une pompe ou un moteur sont décrite plus en détail ci-après en se référant au dessin annexé dans le quel:
fig 1 montre un premier mode de réalisation de l'invention et
fig 2 montre un deuxième mode de réalisation de l'invention.

Les aiguilles (2) sont disposées " presque " à contact entre elles et non pas à plein remplissage comme généralement l'on fait parce-que dans ce cas dans la zone de contact les aiguilles (2) roulent en sens contraire les unes par rapport aux autres et ceci entraine l'inévitable rupture du voile lubrifiant par lequel les aiguilles doivent être au contraire en permanence enroulées ( fig 1. 2 ).

Pour maintenir séparées et à distance constante les aiguilles (2) l'on emploie d'autres aiguilles ou sphères (3), que nous appellerons " intermédiaires " disposées dans les espaces triangulaires à côtes curvilignes contenus entre deux aiguilles (3) adjacentes et la piste annulaire (1).

Le diamètre à donner aux aiguilles intermédiaires (3) est calculé facilement avec une relation qui lie entre eux le nombre et le diamètre des aiguilles principales (2), l'espace mesuré sur la circonférence lieu des centres des aiguilles (2) que l'on entend laisser entr'elles et le diamètre de la piste annulaire (1).

Il est intéressant de noter à ce propos que entre les aiguilles principales (2) et intermédiaires (3) on a, comme il est facile de vérifier, un mouvement de roulement sans frottement, tandis que l'on à un mouvement de frottement entre les aiguilles intermédiaires (3) et la piste annulaire (1). Puisque les forces qui agissent sur celle-ci ont une valeur minimale et puisque tout le système des patins et des aiguilles est complétement enroulé par l'huile, le fonctionnement du système est complétement assuré. Puisque dans les constructions actuelles la distance entre les aiguilles (2) est en général proche de leur rayon, l'adoption de ce système permet d'en augmenter le nombre d'environ 50% et dans ce même rapport augmente par conséquent le nombre des aiguilles sur lesquelles presse chaque patin et donc la poussée que l'huile en pression peut exercer sur eux. Si donc la résistance mécanique des autres organes le permet, le produit pression x débit et par conséquent la puissance transmise par la pompe peuvent être augmentés dans le même rapport, évidemment sans en augmenter les dimensions.

Constructivement, la piste annulaire (1) doit avoir une dureté appropriée, qui peut être obtenue sur le support avec un traitement thermique approprié ou en rapportant sur son intérieur un anneau (6) de la même dureté. Pour maintenir les aiguilles (2) adhérentes à la piste annulaire, même en condition de repos, l'on peut adopter des disques avec une section en L (4, 5).

Evidemment ce qui précéde est donné à pur titre d'exemple et chaque autre solution constructive pourra être adoptée dans le cadre des revendications qui n'altere pas le principe fondamental exposé précédemment.

## Revendications

1. Pompe ou moteur ou pompe et moteur à cylindres radiaux dans laquelle/lequel/lesquels la poussée exercée sur les pistons par l'huile sous pression pendant la phase de refoulement/de travail et que les pistons transmettent aux patins vient s'exercer par les patins sur une piste annulaire extérieure (1,6) au moyen d'aiguilles cylindriques (2) placées directement sur ladite piste annulaire extérieure (1,6) sans l'interposition d'une cage caractérisée en ce que les aiguilles adjacentes sont maintenues séparées entre elles et à distance prédéterminée par des aiguilles (3) ou sphères de diamètre approprié ou par une combinaison des mêmes placées dans l'espace compris entre deux aiguilles (2) adjacentes et la piste annulaire extérieure (1, 6).

2. Pompe ou moteur ou pompe et moteur selon la revendication précédente dans laquelle/lequel/lesquels les aiguilles sont presque à contact entre elles mais ne peuvent pas se toucher de sorte que soit évité le frottement que l'on aurait entre les aiguilles adjacentes et qui pourrait causer la rupture du voile de lubrifiant qui les enroule.

## Patentansprüche

1. Radialzylinderpumpe, -Motor oder Pumpe und Motor in der/in dem/in denen die Kolbenpumpwirkung des Öls unter Druck, während der Lieferung/Arbeitsphase von den Kolben den Schlitten übertragen wird und dank den Schlitten auf einer ringförmigen Aussenlaufbahn (1, 6) durch zylinderförmige Nadeln (2) wirkt, die sich unmittelbar auf der obigen ringförmigen Aussenlaufbahn befinden(1, 6) ohne daß kein spezielles Gerüst zwischenliegt; zwar sind die nebenliegenden Nadeln voneinander getrennt und an einer vorgeschriebenen Distanz gehalten, durch Nadeln (3) oder von Kugeln von geeignetem Durchmesser oder durch eine Kombination derselben, die im Raum zwischen zwei anliegenden Nadeln(2) und der ringförmigen Aussenlaufbahn ist (1, 6).

2. Pumpe oder Motor oder Pumpe und Motor wie in den vorigen Ansprüchen in der/in dem/in denen die Nadeln nebeneinander liegen, ohne sich zu berühren, so daß den Kontakt zwischen den anliegenden Nadeln vermieden wird, der den Bruch ihres Schmierstofffilms verursachen kann.

## Claims

1. Radial cylinder pump or motor or pump and motor in which the thrust applied on pistons by pressurised oil during the delivery/working phase and transmitted by pistons to shoes, is applied, through shoes, on an external ring track (1, 6) by means of cylindrical needles (2) directly placed on the above mentioned external ring track (1, 6) without interposing any special cage: in fact, the adjacent needles are kept separate from each other and at a given distance by some needles (3) or balls having appropriate diameter or by a combination of said parts in the space extending from the two adjacent needles (2) to the external ring track (1, 6).

2. Pump or motor or pump according to the previous claim where needles are nearly in contact with each other, but cannot touch each other in such a way as to avoid friction which would be present between adjacent needles and which could produce the breaking of the film of the lubricant covering them.
